# EUROPÄISCHE PATENTSCHRIFT

(11) **EP 2 344 286 B1**
(45) Veröffentlichungstag und Bekanntmachung des Hinweises auf die Patenterteilung: **20.11.2013**
(21) Anmeldenummer: 09736153.9
(22) Anmeldetag: 15.09.2009
(51) Int. Cl.: B21B 38/02, G01B 11/30

(54) **VERFAHREN UND VORRICHTUNG ZUR ERMITTLUNG EINER PLANHEIT EINES METALLBANDES**
METHOD AND DEVICE FOR DETERMINING A FLATNESS OF A METAL STRIP
PROCÉDÉ ET DISPOSITIF DE DÉTERMINATION D'UNE PLANÉITÉ D'UN RUBAN MÉTALLIQUE

(30) Priorität: 31.10.2008 DE 102008054271
(43) Veröffentlichungstag der Anmeldung: 20.07.2011
(73) Patentinhaber: Siemens Aktiengesellschaft, 80333 München (DE)
(72) Erfinder: SCHMITT, Klaus, 44359 Dortmund (DE); BREITER, Max-Roberto, 91058 Erlangen (DE)
(86) Internationale Anmeldenummer: PCT/EP2009/061957
(87) Internationale Veröffentlichungsnummer: WO 2010/049209

(56) Entgegenhaltungen:
- DE-A1- 2 458 606
- DE-A1- 10 257 639
- FR-A1- 2 695 049
- US-B1- 6 286 349

## Beschreibung

Die Erfindung betrifft ein Verfahren und eine Vorrichtung zur Ermittlung einer Planheit eines Metallbandes unter Zug, insbesondere beim Kalt- oder Warmwalzen, mit mindestens einer berührungslos arbeitenden Messvorrichtung, wobei die mindestens eine Messvorrichtung in einer Position mit einem Abstand und/oder einer Raumlage relativ zur Oberseite und/oder Unterseite des Metallbands angeordnet wird.

Beim Walzen von Metallbändern treten Einflüsse auf, die die Planheit bzw. Ebenheit des Metallbandes beeinträchtigen. Insbesondere beim Kaltwalzen treten Defizite auf bei der Messung und Beeinflussung der Planheit zwischen den Gerüsten mehrgerüstiger Walzstrassen bzw. zwischen einem Gerüst und einer Umlenkrolle bzw. einem Haspel. Vor allem beim Kaltwalzen tritt bei bestimmten Planheitsfehlern die Gefahr von Bandrissen und/oder Faltenbildung mit diversen Folgeproblemen auf.

Es sind bereits diverse Verfahren und Vorrichtungen zur Planheitsmessung bekannt.

Gemäß der DE 102 57 639 A1 wird in mehreren über die Breite des Metallbandes angeordneten Breitenabschnitten die Eigenfrequenz des Metallbandes unter Zuhilfenahme mindestens einer Messvorrichtung ermittelt, wobei die Messvorrichtung das Metallband nicht berührt und aus den für die Breitenabschnitte ermittelten Eigenfrequenzen eine Bandspannungsverteilung im Metallband als Maß für die Planheit des Metallbands ermittelt wird.

Die deutsche Offenlegungsschrift Nr. 23 44 170 beschreibt ein Verfahren zum Bestimmen der Zugspannungsverteilung über die Breite eines kaltgewalzten Bandes mit Hilfe von im Bereich von Bandlängszonen durchgeführten berührungslosen Messungen, um die Planheit des Bandes zu bestimmen.

Die DE 198 03 260 A1 beschreibt eine Einrichtung zur Messung der Zugspannungsverteilung in einem Metallband mit einer Auslenkvorrichtung zur Auslenkung des Metallbandes, mit einer Messvorrichtung zur Messung der Auslenkung des Metallbandes und mit einer Recheneinrichtung zur Berechnung der Zugspannungsverteilung in Abhängigkeit von der Auslenkung des Metallbandes, wobei die Auslenkvorrichtung als Saugvorrichtung zum Ansaugen des Metallbandes ausgebildet ist.

Die DE 100 00 845 A1 offenbart ein Verfahren zur berührungslosen Planheitsmessung von Metallbändern aus ferromagnetischen Werkstoffen, welche Bandprozesslinien oder Kaltwalzwerke durchlaufen.

Die DE 199 11 548 A1 beschreibt ein Verfahren zur berührungslosen Planheitsmessung von Metallbändern, wonach in das Metallband im Wege einer Ultraschall-Beaufschlagung Longitudinalwellen und/oder Transversalwellen eingeschallt werden, deren Laufzeiten gemessen und anhand der Änderungen der Schallgeschwindigkeiten zumindest die longitudinale und/oder transversale Spannungsverteilung der über die Banddicke integrierten Längsspannungen gemessen wird. Aus der Spannungsverteilung wird die korrespondierende Längs-Resteigenspannungsverteilung und die daraus resultierenden Unplanheiten in dem betreffenden Metallband ermittelt.

Die DE 199 47 572 A1 offenbart ein weiteres Verfahren zur Bestimmung der Planheit eines Materialbandes, bei dem mit Hilfe von mindestens zwei Strahlungsquellen und einer Mehrzahl von Detektoren an einer Mehrzahl von Messpunkten Messwerte aufgenommen werden.

In der Praxis hat es sich gezeigt, dass bestimmte Verfahrensparameter, insbesondere hinsichtlich der Produktionsbedingungen und der Ausgestaltung des zu vermessenden Metallbands, einen wesentlichen bzw. ungünstigen Einfluss auf die vollständige Abbildung des abstandsbezogenen Messbereichs haben.

Aus der deutschen Offenlegungsschrift Nr. 24 58 606 ist bereits ein Verfahren und eine Vorrichtung zum Erfassen der Planheit eines kaltgewalzten ferromagnetischen Bandes bekannt, bei dem berührungslos arbeitende Elektromagnete eingesetzt werden. Die Magnete sind auf einem gemeinsamen Träger angeordnet, der senkrecht zu Bandoberfläche verstellbar ist. Zum Verstellen der Position des Trägers ist ein mit einem Regler verbundener Antrieb, hier in Form eines Hydraulikzylinders, der mit Kniegelenken eines Kniehebeltriebes verbunden ist, vorhanden.

Es ist Aufgabe der Erfindung, ein Verfahren und eine Vorrichtung der eingangs genannten Art anzugeben, mit welchen die Positioniergenauigkeit einer Messvorrichtung zur Ermittlung einer Planheit eines Metallbandes sowie deren Betriebssicherheit erhöht werden kann.

Der dem Verfahren zuzuordnende Teil der Aufgabe wird gelöst durch ein Verfahren zur Ermittlung einer Planheit eines Metallbandes unter Zug, wobei mindestens eine Messvorrichtung in einer Position mit einem Abstand und/oder einer Raumlage relativ zur Oberseite und/oder Unterseite des Metallbands angeordnet wird, und wobei mindestens eine Verstelleinrichtung derart mit der mindestens einen Messvorrichtung verbunden wird, dass die Position der mindestens einen Messvorrichtung relativ zur Oberseite und/oder Unterseite des Metallbands verstellbar ist, während das Metallband unter Zug bewegt wird, wobei die Position der mindestens einen Messvorrichtung gegenüber der Oberseite und/oder der Unterseite des Metallbands mittels mindestens einer elektromechanischen Verstelleinrichtung in Form eines Gewindespindeltriebs oder mittels mindestens einer Verstelleinrichtung in Form einer pneumatischen oder hydraulischen Keilverstellung verstellt wird.

Der der Vorrichtung zuzuordnende Teil der Aufgabe wird gelöst durch eine Vorrichtung zur Ermittlung einer Planheit eines bewegten Metallbandes unter Zug, insbesondere nach dem erfindungsgemäßen Verfahren, mit mindestens einer berührungslos arbeitenden Messvorrichtung, die in einer Position mit einem Abstand und/oder einer Raumlage relativ zur Oberseite und/oder Unterseite des Metallbands angeordnet ist, wobei die Vorrichtung weiterhin mindestens eine Verstelleinrichtung aufweist, die derart mit der mindestens einen Messvorrichtung verbunden ist, dass die Position der mindestens einen Messvorrichtung relativ zur Oberseite und/oder Unterseite des bewegten Metallbands verstellbar ist, wobei die Position der mindestens einen Messvorrichtung gegenüber der Oberseite und/oder der Unterseite des Metallbands mittels mindestens einer elektromechanischen Verstelleinrichtung in Form eines Gewindespindeltriebs oder mittels mindestens einer Verstelleinrichtung in Form einer pneumatischen oder hydraulischen Keilverstellung verstellbar ist.

Es hat sich gezeigt, dass es abhängig von der Geometrie eines Metallbands, der metallurgischen Beschaffenheit eines Metallbands und den Produktionsbedingungen bei der Herstellung eines Metallbands im Wesentlichen eine optimale Position für die mindestens eine berührungslos arbeitende Messvorrichtung relativ zum Metallband gibt, in der die Planheitsermittlung im Allgemeinen ohne Einschränkungen durchführbar ist.

Der zur Verfügung stehende Messbereich der in der mindestens einen Messvorrichtung üblicherweise eingesetzten Sende- und/oder Empfangseinheiten bzw. Sensoren wurde als nicht ausreichend erkannt, um alle in der Praxis auftretenden Einflüsse zu kompensieren und eine kontinuierliche Planheitsermittlung sicherzustellen.

Ein zu großer wie auch ein zu kleiner Abstand zwischen der Messvorrichtung und dem Metallband oder Bereichen des Metallbands führen zu Fehlmessungen bei der Bestimmung der Planheit des Metallbands. Aber auch eine Schräglage einer Messvorrichtung gegenüber der Oberfläche des Metallbands, welche zur Messvorrichtung zeigt, führt zu Fehlmessungen bei der Bestimmung der Planheit, sofern die Abstände zwischen der Messvorrichtung und dem Metallband an den beiden Seiten des Metallbands wesentlich, d.h. um wenigstens ± 0,1 mm pro Meter Breite einer Messvorrichtung, voneinander abweichen.

Die Position einer Messvorrichtung relativ zum Metallband ist dabei im Wesentlichen bestimmt über einen Abstand zwischen der Messvorrichtung und dem Metallband in Nulllage (= Ebene, um die sich das Metallband bewegt) oder über die Abstände zwischen der Messvorrichtung und Bereichen des Metallbands in Nulllage, sowie die Raumlage der Messvorrichtung relativ zum Metallband, insbesondere zur Oberfläche des Metallbands, welche zur Messvorrichtung zeigt.

Im Allgemeinen wird von einer im Wesentlichen parallelen oder aber nur geringfügig schrägen Ausrichtung einer Längsachse einer langgestreckten Messvorrichtung gegenüber einer Ober-und/oder Unterseite eines Metallbands ausgegangen. Es liegt beispielsweise eine schräge Ausrichtung oder Raumlage einer Messvorrichtung vor, wenn sich der Abstand einer langgestreckten Messvorrichtung zum Metallband über die Breite des Metallbands hinweg verändert. Weiterhin wird von einer im Wesentlichen senkrechten Ausrichtung der Längsachse einer langgestreckten Messvorrichtung zu einer Bandlaufrichtung ausgegangen, die im Messbetrieb üblicherweise keiner Veränderung bedarf.

Das erfindungsgemäße Verfahren und die erfindungsgemäße Vorrichtung ermöglichen eine besonders positionsgenaue, kontinuierliche Änderung bzw. Optimierung der Position mindestens einer Messvorrichtung relativ zum Metallband, während das Metallband kontinuierlich fortbewegt wird. Ein Stillstand des Metallbands zur Änderung der Position der mindestens einen Messvorrichtung ist nicht erforderlich. Dies ermöglicht eine schnelle und unkomplizierte Anpassung der Position der Messvorrichtung an ein bestimmtes Metallband oder bei einem Wechsel zu einer unterschiedlichen Metallband-Geometrie und/oder Metallband-Qualität.

Auch auf veränderte Produktionsbedingungen, wie eine Verstellung des Bandlaufs aufgrund von variabel verstellbaren Positionen von Walzen, eine Veränderung des Bandzugs, eine auftretende Verwölbung innerhalb des Metallbands usw., welche mit einer Änderung der Nulllage des Metallbands oder Teilen des Metallbands einher gehen, kann zeitnah reagiert werden und die Position einer Messeinrichtung stets optimal gegenüber dem Metallband eingestellt werden.

Weiterhin ermöglichen das erfindungsgemäße Verfahren und die erfindungsgemäße Vorrichtung eine Verbesserung der Messgenauigkeit bei der Bestimmung der Planheit des Metallbands und eine erhöhte Verfügbarkeit der Messung aufgrund einer optimal positionierten Messvorrichtung.

Verstelleinrichtungen in Form eines Gewindespindeltriebs oder einer pneumatischen oder hydraulischen Keilverstellung ermöglichen eine automatische Verstellung der Position der Messvorrichtung, die insbesondere auch aus größerer Entfernung zum Metallband bzw. zur Vorrichtung veranlasst werden kann.

Der erfindungsgemäße Einsatz einer elektromechanischen Verstelleinrichtung in Form eines Gewindespindeltriebs, besonders bevorzugt eines Kugelgewindetriebs, ermöglicht besonders hohe Positioniergenauigkeiten bei der Positionierung der Messvorrichtung und eine sehr genaue Reproduzierbarkeit einer bereits früher eingestellten Position. Die Einstellung eines Gewindespindeltriebs bleibt auch bei Ausfall der Ansteuerung, beispielsweise bei einem Stromausfall, erhalten. Ein Gewindespindeltrieb kann dabei unmittelbar auf die Messvorrichtung einwirken oder eine Änderung der Position der mindestens einen Messvorrichtung in einer bevorzugten Ausführungsform mittels einer Keilverstellung ermöglichen. Der Gewindespindeltrieb treibt dabei eine Keilverstellung an, indem eine Spindel des Gewindespindeltriebs in einen Keil der Keilverstellung hinein oder aus diesem heraus gedreht wird, um unterschiedliche Keilpositionen einzustellen.

Unter einer "Keilverstellung" wird hier und nachfolgend allgemein eine Verstellung der Lage von einem oder mehreren Keilen verstanden, die auf eine beweglich gelagerte Messvorrichtung einwirken, wodurch in Folge eine Änderung der Position der mindestens einen Messvorrichtung bewirkt wird. Der Keil wird dabei insbesondere horizontal bewegt, wobei die schräge Fläche des Keils an der Messvorrichtung angreift und eine vertikale Bewegung der Messvorrichtung bewirkt.

Eine Verstelleinrichtung in Form einer hydraulischen Keilverstellung, bei der ein Keil hydraulisch angetrieben wird, benötigt in der Regel einen Anschluss an ein hydraulisches Leitungssystem, während eine Verstelleinrichtung in Form einer pneumatischen Keilverstellung, bei der ein Keil pneumatisch angetrieben wird, in der Regel einen Anschluss an ein pneumatisches Leitungssystem benötigt.

Besonders bevorzugt werden das erfindungsgemäße Verfahren und die erfindungsgemäße Vorrichtung zur Planheitsermittlung an Metallbändern eingesetzt, die in Kalt- oder Warmwalzstraßen verarbeitet werden. Aber auch ein Einsatz an Metallbändern, die in kontinuierlichen Anlagen, wie Dressierwalzgerüsten oder Bandbehandlungsanlagen usw., beispielsweise in Glühlinien oder Beschichtungslinien, verarbeitet werden, ist von Vorteil.

Es hat sich bewährt, wenn die Position der mindestens einen Messvorrichtung mittels der mindestens einen Verstelleinrichtung gegenüber der Oberseite und/oder der Unterseite des Metallbands verstellt wird bzw. verstellbar ist, während das Metallband bewegt wird. Dies ist während des Bandlaufs einfacher zu realisieren als eine Änderung der Nulllage des Metallbandverlaufs. Alternativ oder in Kombination kann aber auch die Nulllinie des Metallbands, beispielsweise durch eine Höhenverstellung von Walzen oder ähnlichem, verstellbar sein.

Es ist bevorzugt, wenn mittels der mindestens einen berührungslos arbeitenden Messvorrichtung in mehreren über eine Breite des Metallbands angeordneten Breitenabschnitten jeweils ein Messwert erfasst wird oder erfassbar ist, wobei aus den erfassten Messwerten die Planheit des Metallbands ermittelt wird oder ermittelbar ist. Hinsichtlich der genauen Funktionsweise einergeeigneten Vorrichtung zur Ermittlung der Planheit wird auf die DE 198 03 260 A oder die DE 102 57 639 A1 verwiesen.

Es ist von Vorteil, in Laufrichtung des Metallbands gesehen mindestens zwei Messvorrichtungen nebeneinander anzuordnen. Der Begriff "nebeneinander" soll hierbei Anordnungen umfassen, bei denen mindestens zwei Messvorrichtungen nebeneinander und unmittelbar aneinander angrenzend angeordnet sind, bei denen mindestens zwei Messvorrichtungen nebeneinander und beabstandet voneinander angeordnet sind oder bei denen mindestens zwei Messvorrichtungen versetzt nebeneinander, d.h. in Bandlaufrichtung gesehen überlappend zueinander angeordnet sind. Durch derart nebeneinander angeordnete Messvorrichtungen können insbesondere einzelne Teilbereiche der Breite des Metallbands separat vermessen werden. Dies ist insbesondere dann von Vorteil, wenn das Metallband im Querschnitt gesehen im Wesentlichen nicht plan, sondern stark verwölbt ausgebildet ist. So treten in der Praxis Verwölbungen an Metallbändern auf, die ein Vielfaches der Dicke des Metallbandes betragen können. Um eine Beschädigung einer Messvorrichtung oder eines Metallbands durch ein verwölbtes Metallband zu verhindern und eine funktionierende Messung über die gesamte Breite eines stark verwölbten Metallbands sicherzustellen, ist bevorzugt eine Lage von mindestens zwei nebeneinander angeordneten Messvorrichtungen relativ zueinander, oder Abschnitten der Messvorrichtungen relativ zueinander, veränderbar. So kann für jede der nebeneinander vorhandenen Messvorrichtungen oder Abschnitte dieser ein optimaler Abstand zum Metallband eingestellt werden. Die von den nebeneinander angeordneten Messvorrichtungen über die Breite des Metallbands erfassten Werte werden bevorzugt zu einem gemeinsamen Datensatz zusammengefasst, der sich von einem Datensatz, der von einer einzelnen Messvorrichtung erfasst wird, nicht wesentlich unterscheidet.

Es ist von Vorteil, in Laufrichtung des Metallbands gesehen mindestens zwei erfindungsgemäße Vorrichtungen nacheinander anzuordnen. Dadurch kann, insbesondere nach einer jeden, die Planheit des Metallbands beeinflussenden Maschinen- oder Arbeitseinheit, wie beispielsweise einem Walzgerüst, die aktuell am Metallband vorliegende Planheit erneut gemessen und überprüft werden.

Eine Messvorrichtung weist mindestens eine, vorzugsweise mehrere Sende- und/oder Empfangseinheiten auf. Weist eine Messvorrichtung einen beweglichen und einen unbeweglichen Abschnitt auf, so ist die mindestens eine Sende- und/oder Empfangseinheit im beweglichen Abschnitt angeordnet. Mittels mindestens eines Sensors können Messwerte, aus denen die Planheit des Metallbandes präzise und synchron über die einzelnen Breitenabschnitte hinweg ermittelbar ist, erfasst werden.

Es ist dabei möglich, für jeden Breitenabschnitt oder auch für mehrere Breitenabschnitte jeweils eine Sende- und/oder Empfangseinheit vorzusehen. Die Anzahl der Sende- und/oder Empfangseinheiten kann größer, gleich oder auch kleiner als die Anzahl der Breitenabschnitte sein.

Mehrere Sende- und/oder Empfangseinheiten sind vorzugsweise auf einem gemeinsamen Messschlitten montiert, wobei die Lage der Sende- und/oder Empfangseinheiten gegenüber dem Messschlitten fixiert oder verstellbar sein kann.

Insbesondere ist die mindestens eine Verstelleinrichtung derart ausgebildet, dass der Abstand der mindestens einen Messvorrichtung zur Oberseite und/oder Unterseite des Metallbands um mindestens ± 5 mm, insbesondere um mindestens ± 10 mm, verstellbar ist. Bevorzugt ist die Position der Messvorrichtung über einen Verstellweg, der im Bereich von ± 5 mm bis ± 50 mm liegt, verstellbar bzw. höhenverstellbar.

Ein Sollwert für den Abstand zwischen einem Metallband und einer Messvorrichtung liegt üblicherweise im Bereich von 3,5 bis 5 mm. Jedoch können auch andere Bereiche für einen Sollwert von Vorteil sein, um die Planheit eines Metallbands zuverlässig ermitteln zu können.

Dabei hat es sich bewährt, wenn eine Messvorrichtung insgesamt beweglich angeordnet ist oder eine Messvorrichtung lediglich einen beweglichen Abschnitt umfassend die mindestens eine Sende- und/oder Empfangseinheit aufweist, der mit einem ortfest montierten Abschnitt verbunden ist. Zwischen dem beweglichen und dem ortfest montierten Abschnitt einer Messvorrichtung ist dabei bevorzugt eine Dichtung angeordnet, um ein Eindringen von Staub, Dampf, usw. in das Innere der Messvorrichtung oder eine Beeinflussung durch sonstige den Betrieb der Vorrichtung beeinträchtigende Einflüsse, die beispielsweise zu Korrosion führen, zu minimieren, besonders im Fall dass eine Schnittstelle zwischen dem ortfesten und beweglichen Abschnitt der Messvorrichtung im Bereich empfindlicher Komponenten der Messvorrichtung angeordnet ist.

Nebeneinander angeordnete Messvorrichtungen (in Laufrichtung des Metallbandes gesehen) werden bevorzugt so angeordnet, dass diese oder bewegliche Abschnitte dieser unabhängig voneinander in ihrer Position mittels je mindestens einer Verstelleinrichtung verstellt werden können. Es kann aber ebenso eine mechanische Verbindung zwischen nebeneinander angeordneten Messvorrichtungen oder beweglichen Abschnitten dieser vorhanden sein, die eine Positionsänderung relativ zueinander zulässt. Die mechanische Verbindung wird dabei bevorzugt in Form eines Gelenks, eines Scharniers oder ähnlichem bereitgestellt. Mindestens eine Verstelleinrichtung wirkt in diesem Fall auf mindestens eine der Messvorrichtungen oder deren beweglichen Abschnitt und/oder die Verbindung zwischen insgesamt beweglichen Messvorrichtungen oder zwischen deren beweglichen Abschnitten ein.

Eine Verstelleinrichtung ist insbesondere derart ausgebildet, dass der Abstand der mindestens einen Messvorrichtung zur Oberseite und/oder Unterseite des Metallbands an jeder Stelle mit einer Positioniergenauigkeit im Bereich von mindestens ± 100 µm, insbesondere im Bereich von ± 10 µm, einstellbar ist.

Um die mindestens eine Verstelleinrichtung im Praxiseinsatz, insbesondere bei Betrieb in einem Walzwerk, vor korrosiver Atmosphäre und mechanischer Beschädigung zu schützen, hat es sich bewährt, die mindestens eine Verstelleinrichtung in einem Gehäuse abgeschirmt oder gekapselt anzuordnen.

Wird eine Verstelleinrichtung in Form einer hydraulischen oder pneumatischen Keilverstellung verwendet, so hat es sich als vorteilhaft erwiesen, wenn während und/oder nach der Verstellung der Position der mindestens einen Messvorrichtung eine mechanische Führung und Lagestabilisierung der mindestens einen Messvorrichtung mittels mindestens einer Einrichtung zur Ausübung eines Gegendrucks auf die Messvorrichtung erfolgt, wobei der Gegendruck auf die der Verstelleinrichtung abgewandte Seite der Messvorrichtung einwirkt. Dies erhöht die Positioniergenauigkeit bei der Positionierung der Messvorrichtung wie auch eine Stabilität im Betrieb der Vorrichtung.

Vorzugsweise ist dabei einer jeden Verstelleinrichtung mindestens eine Einrichtung zur Ausübung eines Gegendrucks zugeordnet.

Als Einrichtung zur Ausübung eines Gegendrucks auf die Messvorrichtung haben sich hydraulische, pneumatische oder mechanische Gegendruckfedern bewährt. Auch eine mechanische Klemmung mittels mindestens einer Zylinderstange hat sich zum Aufbringen eines Gegendrucks als geeignet erwiesen.

Sobald die gewünschte Position der mindestens einen Messvorrichtung erreicht ist, erfolgt bevorzugt eine mechanische Fixierung der Messvorrichtung in dieser Position, um eine unabsichtliche Verschiebung zu verhindern. Eine solche mechanische Fixierung wird bevorzugt mittels mindestens einer Klemmvorrichtung realisiert. Eine Klemmvorrichtung wird vorzugsweise über einen verfahrbaren Hydraulikzylinder bereitgestellt, der seitlich auf die Messvorrichtung einwirkt und diese in ihrer Position festklemmt. Vorzugsweise werden zwei Klemmeinrichtungen eingesetzt, die die beiden Seiten der Messvorrichtung, welche den Kanten des Metallbandes zugeordnet sind, fixieren.

Bevorzugt wird ein Abstand zwischen dem Metallband und der mindestens einen Messvorrichtung pro Breitenabschnitten erfasst, um eine möglichst genaue Aussage zur aktuellen Position der Messvorrichtung zu erhalten. Insbesondere werden die Abstände zwischen Metallband und Messvorrichtung in mindestens zwei Breitenabschnitten erfasst, die eine Aussage hinsichtlich des Abstands der beiden Seiten des Metallbands zur Messvorrichtung zulassen.

Die mindestens eine Messvorrichtung weist vorzugsweise den beiden Kanten oder im Wesentlichen den beiden Kanten des Metallbandes zugeordnet jeweils mindestens eine Verstelleinrichtung auf.

Bei einem Vorliegen von zwei oder mehreren Verstelleinrichtungen können diese gemeinsam oder unabhängig bzw. weitgehend unabhängig voneinander verstellbar sein. Eine gemeinsame oder synchrone Verstellung von zwei oder mehreren Verstelleinrichtungen wird bevorzugt über einen gemeinsamen Antrieb realisiert, während eine getrennte oder asynchrone Verstellung realisiert wird, indem jeder Verstelleinrichtung jeweils ein eigener, unabhängiger Antrieb zugeordnet wird. Die asynchrone Verstellung zweier Verstelleinrichtungen ermöglicht einen Ausgleich einer Schräglage einer damit verbundenen Messvorrichtung.

Um bei einem Vorhandensein von mindestens zwei Verstelleinrichtungen, die in ihrer Lage unveränderlich befestigt sind, eine Verstellung der Verstelleinrichtungen in einer Art und Weise zu vermeiden, die eine unzulässige Schräglage der Messeinrichtung und/oder eine Beschädigung der Verstelleinrichtungen selbst und/oder ein nicht mehr lösbares Klemmen der Messvorrichtung in Schräglage zur Folge hätte, werden in die mindestens zwei Verstelleinrichtungen vorzugsweise Einrichtungen zur Positionserfassung, wie beispielsweise Positionsgeber oder Drehgeber, integriert. Die mittels der Einrichtungen zur Positionserfassung erfassten Positionen der Verstelleinrichtungen werden zueinander abgeglichen und eine Verstellung der Raumlage der Messvorrichtung in Richtung einer unzulässigen und systemschädigenden Schräglage blockiert bzw. ausgeschlossen. Während eine Schräglage einer Messvorrichtung von etwa ± 1mm mittels unbeweglich montierter Verstelleinrichtungen meist ausgeglichen werden kann, sind größere Schräglagen meist unzulässig bzw. führen zu einem Bruch oder einer Beschädigung der Messvorrichtung und sind mittels derart montierter Verstelleinrichtungen meist nicht mehr ohne weiteres ausgleichbar.

Hierzu sind Verstelleinrichtungen erforderlich, die in ihrer relativen Raumlage zueinander verschoben und/oder verkippt werden können. Bevorzugt ist bei der Verwendung von unabhängig voneinander verstellbaren Verstelleinrichtungen, dass die Raumlage mindestens einer der Verstelleinrichtungen veränderbar ist, beispielsweise durch eine Gelenk-, Scharnier- oder Schienenanordnung. Aber auch jede einzelne Verstelleinrichtung oder eine ausgewählte Gruppe von Verstelleinrichtungen kann in ihrer Raumlage veränderbar ausgebildet sein.

Neben einer Erfassung der Abstände zwischen Metallband und Messvorrichtung im Bereich der beiden Seiten des Metallbandes hat sich auch die Erfassung mindestens eines Abstands zwischen Metallband und Messvorrichtung im Bereich der Mitte des Metallbands bewährt, um gegebenenfalls vorhandene Verwölbungen oder Falten im Metallband zuverlässig zu erfassen.

Die erfindungsgemäße Vorrichtung umfasst vorzugsweise mindestens eine Steuereinheit, in welcher Sollwerte für die Positionierung der Messvorrichtung hinterlegt sind oder ermittelbar sind, wobei mittels der mindestens einen Steuereinheit eine Änderung der erfassten Position in Richtung der Sollwerte vornehmbar ist.

In der Steuereinheit ist vorzugsweise auch eine Auswerteeinheit integriert, mit welcher die Planheitsermittlung durchgeführt wird. Eine derartige Auswerteeinheit kann aber auch unabhängig von der Steuereinheit vorhanden und lediglich über eine Datenleitung mit dieser verbunden sein.

Bevorzugt werden die in den Breitenabschnitten erfassten Abstände an die mindestens eine Steuereinheit übermittelt, in welcher Sollwerte für die Positionierung der Messvorrichtung hinterlegt sind oder ermittelt werden, wobei die mindestens eine Steuereinheit in Folge eine Änderung der Position der Messvorrichtung in Richtung der Sollwerte veranlasst, soweit dies erforderlich ist.

Ein Sollwert wird durch manuell oder automatisch generierte Daten, die gegebenenfalls einer Rechen- oder Auswerteroutine unterworfen werden, erzeugt. Sollwerte können dabei für Vergleichszwecke fest in der Vorrichtung, insbesondere der Steuereinheit, hinterlegt sein und/oder bei jeder erforderlichen Neupositionierung der Messeinrichtung(en) neu generiert werden.

Die Steuereinheit generiert bevorzugt mindestens ein Steuersignal, welches zur manuellen und/oder automatischen Ansteuerung der mindestens einen Verstelleinrichtung verwendet wird.

Wird eine Überschreitung einer vorbestimmten, maximal zulässige Abweichung der ermittelten Position der Messvorrichtung von den Sollwerten festgestellt, so hat es sich bewährt, wenn die mindestens eine Verstelleinrichtung derart verstellt wird, dass die mindestens eine Messvorrichtung vor mechanischer Beschädigung durch das Metallband geschützt wird. Die Messvorrichtung wird dabei in eine sichere Parkposition gefahren. Dies ist insbesondere von Vorteil, wenn ein Abriss des Metallbands auftritt, das Metallband unzulässig stark schwingt, der durch die Verstelleinrichtung vorgegebene Verstellweg zur Verstellung der Position der Messvorrichtung nicht mehr ausreicht, eine unzulässige Schräglage der Messvorrichtung eingestellt werden müsste, usw., so dass eine Beschädigung der Messvorrichtung ausgeschlossen werden kann.

In einer bevorzugten Ausgestaltung der Erfindung wird wenigstens ein Sollwert zur Positionierung der Messvorrichtung basierend auf mindestens einem Verfahrensparameter ermittelt, wobei der Verfahrensparameter eine Geometrie des Metallbands und/oder eine Qualität des Metallbands und/oder sonstige Prozessparameter, wie beispielsweise die Lage einer Nulllage des Metallbands, betrifft.

Wird in die mindestens eine Verstelleinrichtung eine Einrichtung zur Positionserfassung, wie beispielsweise ein Positionsgeber oder Drehgeber, integriert, so hat es sich beispielsweise ebenfalls bewährt, wenn die damit erfassten Positionsdaten als sonstige Prozessparameter mittels einer seriellen Datenkopplung (beispielsweise SSI oder Profibus) oder mittels Impulsauskopplung an die mindestens eine Steuereinheit zwecks Anzeige, Kalibrierung und Kontrolle übermittelt werden.

Insbesondere wird ein Verfahrensparameter aus der Gruppe umfassend eine Härte des Metallbands, einen E-Modul des Metallbands, eine Dicke des Metallbands, eine Breite des Metallbands, eine Zugkraft am Metallband sowie von Koordinaten hinsichtlich einer Raumlage oder zeitlichen Abfolge der Raumlage einer Nulllage des Metallbands gewählt. Weiterhin ist es von Vorteil, wenn eine Querschnittsfläche des Metallbands, eine Amplitude und/oder Frequenz der Schwingung des Metallbands, die frei schwingende Länge des Metallbands, usw. als Verfahrensparameter erfasst und zur Sollwertbildung verwendet wird/werden.

Der mindestens eine Verfahrensparameter kann dabei manuell und/oder automatisch erfasst werden, insbesondere mittels oder in der Steuereinheit.

Nachfolgend werden Ausgestaltungen der Erfindung anhand von Ausführungsbeispielen in Verbindung mit den beispielhaften Figuren 1 bis 10 erläutert. Es zeigen:
- Fig. 1: eine schematische Seitenansicht einer Walzstraßenanordnung zur Durchführung des Verfahrens;
- Fig. 2: die schematische Seitenansicht gemäß Figur 1 mit weiteren Details;
- Fig. 3: eine schematische Ansicht der Anordnung gemäß Figur 2 im Querschnitt durch das Metallband auf Höhe der Messvorrichtung;
- Fig. 4: eine schematische Seitenansicht einer Anordnung zur Durchführung des Verfahrens mit einem Schlingenheber;
- Fig. 5: eine schematische Seitenansicht einer Anordnung zur Durchführung des Verfahrens mit einer Umlenkrolle und einem Haspel;
- Fig. 6: eine schematische Seitenansicht einer mehrgerüstigen Walzstraßenanordnung zur Durchführung des Verfahrens;
- Fig. 7: eine schematische Ansicht einer ersten Vorrichtung und eines Metallbands im Querschnitt auf Höhe einer Messvorrichtung;
- Fig. 8: eine schematische Ansicht einer zweiten Vorrichtung und eines Metallbands im Querschnitt auf Höhe der Messvorrichtung;
- Fig. 9: eine schematische Ansicht einer dritten Vorrichtung und eines Metallbands im Querschnitt auf Höhe der Messvorrichtung; und
- Fig. 10: eine schematische Ansicht einer vierten Vorrichtung und eines Metallbands im Querschnitt auf Höhe der Messvorrichtung.

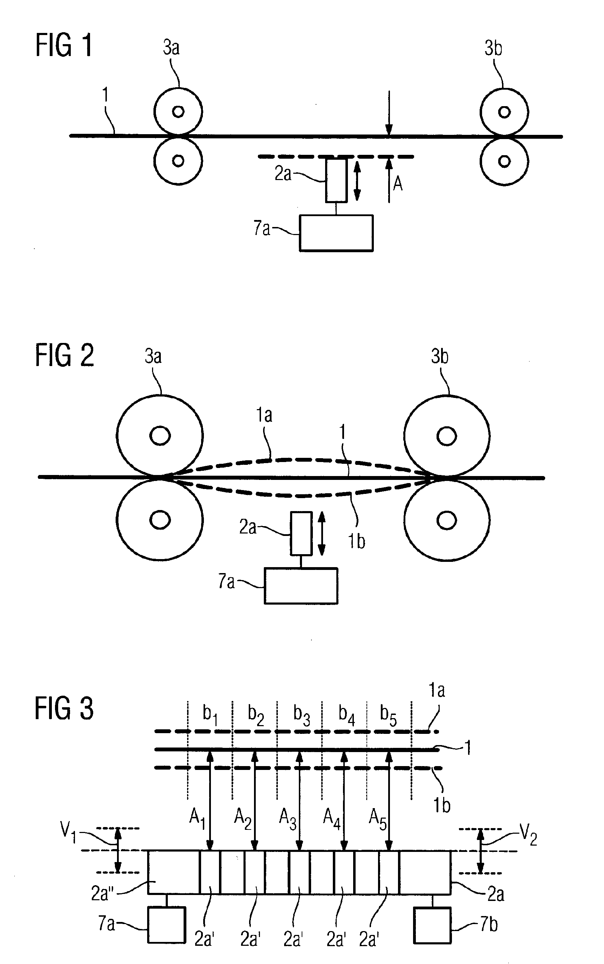

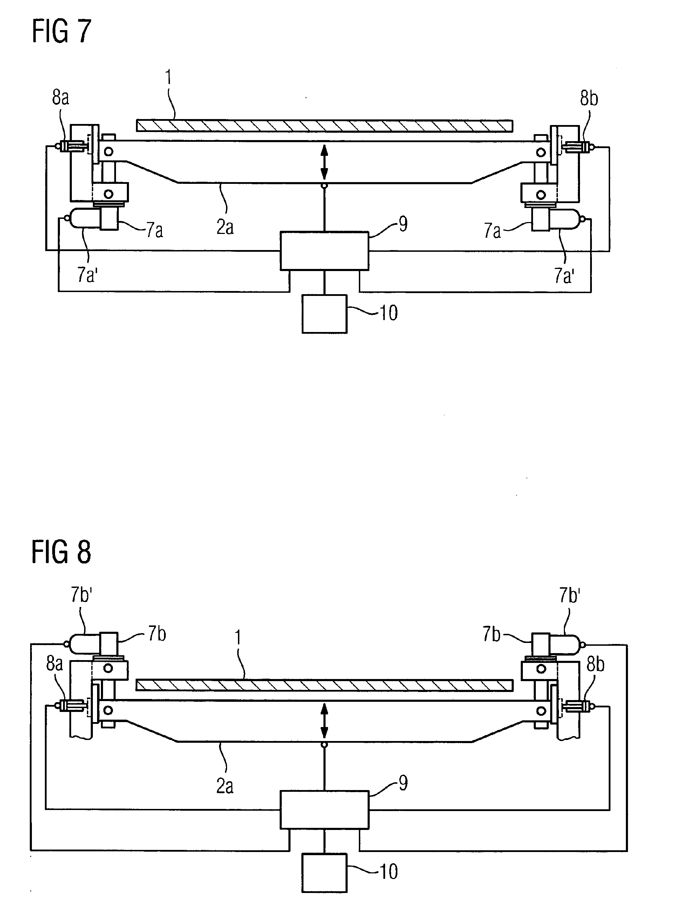

Fig. 1 zeigt schematisch einen Ausschnitt aus einer Walzstrasse in der Seitenansicht. Ein Metallband 1, von welchem hier lediglich ein Abschnitt dargestellt ist, wird dabei kontinuierlich unter Zug von einem ersten Walzgerüst 3a in Richtung eines zweiten Walzgerüstes 3b transportiert. Zwischen dem ersten Walzgerüst 3a und dem zweiten Walzgerüst 3b ist eine Vorrichtung zur Ermittlung der Planheit des bewegten Metallbandes 1 mittels einer berührungslos arbeitenden Messvorrichtung 2a angeordnet, welche in dieser Ausführungsform in mehreren, über die Breite des Metallbands 1 angeordneten Breitenabschnitten b1, b2, b3, b4, b5 (siehe Figur 3) jeweils einen Messwert erfasst und wobei aus den erfassten Messwerten die Planheit des Metallbands 1 ermittelt wird. Die Planheitsermittlung erfolgt insbesondere gemäß der DE 198 03 260 A oder der DE 102 57 639 A1, kann aber auch anderweitig erfolgen. Die Messvorrichtung 2a ist in einer Position mit einem Abstand A senkrecht zur Längsachse des Metallbands 1 und zur Unterseite des Metallbands 1 hin ausrichtet angeordnet. Die Vorrichtung weist weiterhin zwei Verstelleinrichtungen 7a, 7b (siehe auch Figur 3) auf, die derart mit der Messvorrichtung 2a verbunden ist, dass die Position der Messvorrichtung 2a gegenüber der Unterseite des bewegten Metallbands 1, wie durch den Doppelpfeil angedeutet, verstellbar ist. Mittels der Verstelleinrichtungen 7a, 7b sind der Abstand A und/oder die Raumlage der Messvorrichtung 2a gegenüber dem Metallband 1 veränderbar. Die Verstelleinrichtungen 7a, 7b sind entweder durch je einen Gewindespindeltrieb oder je eine pneumatische oder hydraulische Keilverstellung realisiert (siehe FIG 7 bis 10).

Fig. 2 zeigt die schematische Seitenansicht gemäß Figur 1 inklusive weiterer Details. Das Metallband 1 ist, wie bereits in Figur 1, in seiner Nulllage dargestellt, um welche das Metallband 1 sich bewegt. Die Schwingungsweite des Metallbandes 1 um die Nulllage ist über die gestrichelten Linien 1a, 1b dargestellt. Die Position der Messvorrichtung 2a wird mittels der Verstelleinrichtungen 7a, 7b optimal eingestellt, wobei es zu keiner Kollision mit dem schwingenden und vom ersten Walzgerüst 3a in Richtung des zweiten Walzgerüsts 3b bewegten Metallbands 1 kommen kann.

Alternativ kann die Messvorrichtung 2a auch oberhalb des Metallbands 1 oder links bzw. rechts des Schwingungsbauches bzw. anderweitig versetzt dazu angeordnet sein.

Figur 3 zeigt eine schematische Ansicht der Anordnung gemäß Figur 2 im Querschnitt durch das Metallband 1 auf Höhe der Vorrichtung umfassend die Messvorrichtung 2a und die zwei Verstelleinrichtungen 7a, 7b. Das Metallband 1 ist in seiner Nulllage dargestellt, wobei die Schwingungsweite des Metallbandes 1 um die Nulllage über die gestrichelten Linien 1a, 1b dargestellt ist (vergleiche auch Figur 2).

Die Messvorrichtung 2a weist fünf Sende- und/oder Empfangseinheiten 2a' auf, die jeweils einem Breitenabschnitt b1, b2, b3, b4, b5 des Metallbands 1 zugeordnet und auf einem gemeinsamen Messschlitten 2a" montiert sind. Die Sende- und/oder Empfangseinheiten 2a' können dabei auf dem Messschlitten 2a" ortfest montiert sein, so dass deren Lage zueinander nicht verändert werden kann. Alternativ können die Sende- und/oder Empfangseinheiten 2a' auf dem Messschlitten derart angeordnet sein, dass ihre Lage zueinander, manuell oder vorzugsweise automatisch, verändert werden kann. Dies ermöglicht eine Anpassung des Abstands einer einzelnen Sende- und/oder Empfangseinheit 2a' zum Metallband 1, was insbesondere bei über die Breite des Metallbands 1 auftretenden Verwölbungen des Metallbands 1 von Vorteil ist und die Einsatzfähigkeit aller Sende- und/oder Empfangseinheiten 2a' sicherstellt.

Die Sende- und/oder Empfangseinheiten 2a' dienen insbesondere der Planheitsermittlung am Metallband 1. Mittels der Sende- und/oder Empfangseinheiten 2a' kann weiterhin jeweils ein Abstand A1, A2, A3, A4, A5 im jeweiligen Breitenabschnitt b1, b2, b3, b4, b5 ermittelt werden, wobei die ermittelten Abstandswerte zur Verstellung der Position der Messvorrichtung 2a in Richtung eines Sollwerts dienen.

Die Sende- und/oder Empfangseinheiten 2a' bestehen vorzugsweise aus in Reihe angeordneten optischen Sensoren. Die Sensoren arbeiten berührungslos. Alternativ ist es auch möglich, mit weniger Sende- und/oder Empfangseinheiten 2a' als Breitenabschnitten b1, b2, b3, b4, b5 zu arbeiten. So kann die Messvorrichtung 2a nur einen einzigen Sensor aufweisen. Die Messwerte werden insbesondere über den ganzen Breitenbereich und in allen Breitenabschnitten b1, b2, b3, b4, b5 zeitgleich erfasst.

Der Messschlitten 2a" ist an seinen beiden, den Kanten des Metallbands 1 zugeordneten Seiten mit je einer fest montierten Verstelleinrichtung 7a, 7b verbunden, welche jeweils einen hier nicht gesondert dargestellten Positionsgeber umfassen. Die Verstelleinrichtungen 7a, 7b ermöglichen eine Änderung der Position der Messvorrichtung 2a gegenüber dem Metallband 1 derart, dass die Abstände A1, A2, A3, A4, A5 kontinuierlich oder stufenweise verstellt und optimiert werden können. Auch eine Schräglage des Messschlittens 2a" im Hinblick auf die Nulllage des Metallbands 1 von beispielsweise ± 1 mm kann mittels der beiden Verstelleinrichtungen 7a, 7b üblicherweise ausgeglichen werden. Zum Schutz der Vorrichtung verhindern die Positionsgeber eine Einstellung größerer Schräglagen. Die Verstelleinrichtungen 7a, 7b sind entweder durch je einen Gewindespindeltrieb oder je eine pneumatische oder hydraulische Keilverstellung realisiert (siehe FIG 7 bis 10).

Der maximal mögliche Verstellweg V1, V2, auf welchem die Messvorrichtung 2a in Richtung der Unterseite des Metallbands 1 oder davon weg bewegt werden kann, ist in Figur 3 ebenfalls dargestellt. Zum Ausgleich einer Schräglage der Messvorrichtung 2a gegenüber dem Metallband 1 wird zumindest mittels einer der Verstelleinrichtungen 7a, 7b eine Positionsänderung bewirkt.

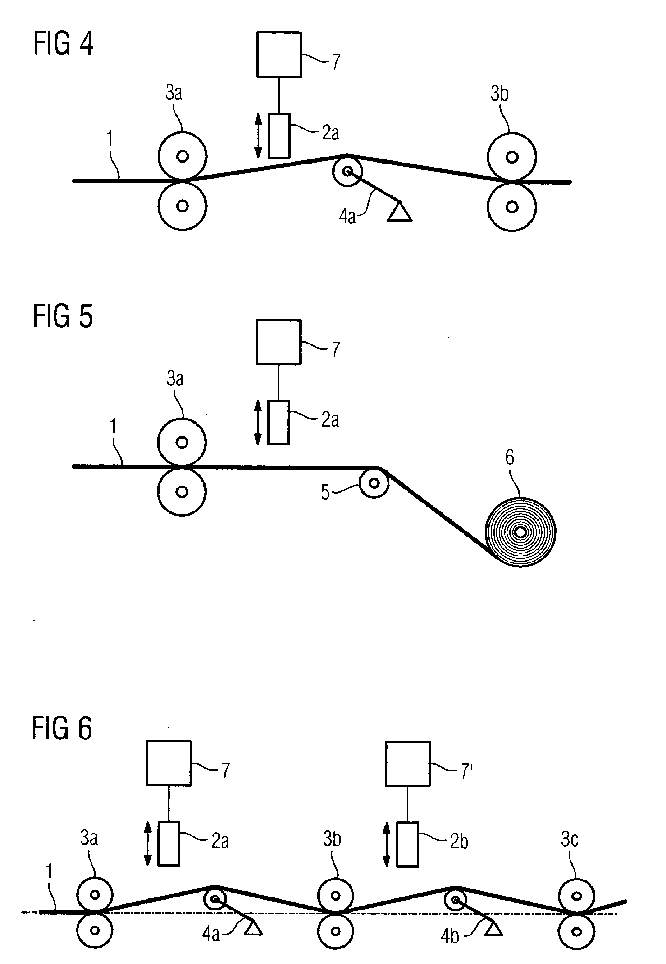

Figur 4 zeigt eine schematische Seitenansicht einer weiteren Walzstraßenanordnung mit einem Schlingenheber 4a. Eine berührungslos arbeitende Vorrichtung zur Ermittlung der Planheit des bewegten Metallbands 1 umfassend eine Messvorrichtung 2a und eine Verstelleinrichtung 7 ist dabei oberhalb des Metallbands 1 zwischen dem ersten Walzgerüst 3a und dem Schlingenheber 4a angeordnet. Alternativ oder zusätzlich kann eine weitere Vorrichtung zur Ermittlung der Planheit des bewegten Metallbands 1 zwischen dem Schlingenheber 4a und dem zweiten Walzgerüst 3b angeordnet werden.

Fig. 5 zeigt eine schematische Seitenansicht einer weiteren Anordnung zur Durchführung eines Verfahrens mit einer Umlenkrolle 5 und einem Haspel 6, auf dem das Metallband 1 aufgewickelt wird. Eine Vorrichtung zur Ermittlung der Planheit des bewegten Metallbands 1 umfassend eine Messvorrichtung 2a und eine Verstelleinrichtung 7, beispielsweise in Form eines Gewindespindeltriebs, ist oberhalb des Metallbandes 1 zwischen dem ersten Walzgerüst 3a und dem Haspel 6 angeordnet. Die Umlenkrolle 5 befindet sich zwischen dem ersten Walzgerüst 3a und dem Haspel 6 bzw. zwischen der Vorrichtung zur Planheitsermittlung und dem Haspel 6. Zwischen dem ersten Walzgerüst 3a und der Vorrichtung umfassend die Messvorrichtung 2a kann optional eine sogenannte, hier nicht dargestellte Bandrolle, wie eine Bandberuhigungsrolle, eine Anticrimpingrolle, eine Anticrossbowrolle, eine Andruckrolle und dergleichen, eingeschwenkt oder eingehoben werden, die auf der Ober- oder Unterseite des Metallbands 1 angeordnet wird und die Lage der Nulllinie des Metallbands 1 verändert.

Fig. 6 zeigt eine schematische Seitenansicht einer mehrgerüstigen Walzstraßenanordnung zur Durchführung eines Verfahrens mit einer Vorrichtung zur Planheitsbestimmung, die zwei Messvorrichtungen 2a, 2b und zwei Verstelleinrichtungen 7, 7', beispielsweise in Form eines Gewindespindeltriebs, umfasst. Der hier gezeigte Ausschnitt der Walzstrasse weist das erste Walzgerüst 3a, das zweite Walzgerüst 3b, ein drittes Walzgerüst 3c und zwei Schlingenheber 4a, 4b auf, wobei zwischen dem ersten Walzgerüst 3a und dem zweiten Walzgerüst 3b sowie zwischen dem zweiten Walzgerüst 3b und dem dritten Walzgerüst 3c je ein Schlingenheber 4a, 4b angeordnet ist. Die Messvorrichtung 2a mit der Verstelleinrichtung 7 befindet sich zwischen dem ersten Walzgerüst 3a und dem Schlingenheber 4a, während sich die Messvorrichtung 2b mit der Verstelleinrichtung 7' zwischen dem zweiten Walzgerüst 3b und dem Schlingenheber 4b befindet.

Es sind durchaus weitere Anordnungen von Vorrichtungen zur Planheitsermittlung innerhalb einer Walzstrasse denkbar, beispielsweise eine beliebige Kombination einer der in den Figuren 1, 4, 5 und 6 gezeigten Anordnungen, mit mehreren unter- und/oder oberhalb des Metallbandes 1 angeordneten Messvorrichtungen.

Fig. 7 zeigt eine schematische Ansicht einer ersten Vorrichtung zur Planheitsermittlung und eines Metallbands 1 im Querschnitt auf Höhe einer Messvorrichtung 2a. Die Messvorrichtung 2a ist unterhalb des Metallbandes 1 höhenverstellbar angeordnet. Dazu ist die Messvorrichtung 2a zu beiden Seiten mit je einer elektromechanischen Verstelleinrichtung 7a, 7b verbunden, welche hier in Form von auf der dem Metallband 1 abgewandten Seite der Messvorrichtung 2a angeordneten Gewindespindelantrieben realisiert sind. Die Gewindespindelantriebe umfassen jeweils einen Antriebsmotor 7a', 7b' in Form eines Servomotors. Eine Steuereinheit 9 übernimmt nicht nur die Erfassung von mit der Messvorrichtung 2a erfassten Messdaten hinsichtlich der Bandspannung bzw. der Planheit, sondern auch von über die Breite des Metallbands 1 gemessenen Abständen zwischen der Messvorrichtung 2a und dem Metallband 1. Die Kommunikation zwischen der Steuereinheit 9 und der Messvorrichtung 2a ist durch eine Verbindungslinie zwischen beiden Elementen lediglich schematisch angedeutet. Weiterhin ist die Steuereinheit 9 mit einer optionalen Eingabeeinheit 10, beispielsweise in Form eines Bedienpults, verbunden. Über die Eingabeeinheit 10 werden insbesondere Verfahrenparameter eingegeben oder eingespeist und an die Steuereinheit 9 übermittelt. Dabei werden Verfahrensparameter betreffend die Geometrie des Metallbands 1, die Beschaffenheit bzw. Qualität des Metallbands 1 sowie anlagenbedingte Parameter, insbesondere betreffend die Nulllage des Metallbands 1 in der Walzstraße, berücksichtigt.

In der Steuereinheit 9 werden die Verfahrensparameter dazu verwendet, mindestens einen Sollwert für die Position der Messvorrichtung 2a gegenüber dem Metallband 1 bereitzustellen oder zu ermitteln. Der mindestens eine Sollwert wird anschließend mit den, mittels der Messvorrichtung 2a gemessenen Abstandswerten bzw. daraus gegebenenfalls ermittelten Positionswerten verglichen und bei Bedarf mindestens ein Steuersignal erzeugt und an die beiden Verstelleinrichtungen 7a, 7b übermittelt. Das mindestens eine Steuersignal bewirkt, dass der Istwert der Position der Messvorrichtung 2a mittels der Verstelleinrichtungen 7a, 7b an den Sollwert angepasst wird. Dazu wird die Messvorrichtung 2a mittels der Gewindespindelantriebe nach oben in Richtung des Metallbands 1 oder weg vom Metallband 1 bewegt. Zum Ausgleich einer Schräglage der Messvorrichtung 2a gegenüber dem Metallband 1 ist auch eine lediglich einseitige oder gegenläufige Bewegung über die Gewindespindelantriebe einstellbar.

Sobald die Messvorrichtung 2a ihre optimale Position gemäß der Sollwertvorgabe erreicht hat, werden mittels der Steuereinheit 9 optional vorhandene Klemmvorrichtungen 8a, 8b, hier in Form von hydraulischen Klemmzylinder, aktiviert, welche die Messvorrichtung in ihrer aktuellen Position fixieren und gegen unbeabsichtigte Positionsänderungen sichern. Erfolgt eine Änderung der Verfahrensparameter, beispielsweise durch einen Metallbandwechsel, welche der Steuereinheit 9 insbesondere mittels der Eingabeeinheit 10 mitgeteilt wird, wird in der Steuereinheit 9 mindestens ein neuer Sollwert für die Position der Messvorrichtung 2a ermittelt, ein Signal ausgegeben, das ein Lösen der Klemmzylinder bewirkt und der Istwert der Position der Messvorrichtung 2a mittels der Verstelleinrichtungen 7a, 7b in Richtung des neuen mindestens einen Sollwerts verändert. Die hydraulischen Klemmzylinder können aber auch entfallen.

Die Kommunikation zwischen der Steuereinheit 9 und den einzelnen Komponenten der Vorrichtung zur Planheitsermittlung, wie der Messvorrichtung 2a, der Verstelleinrichtungen 7a, 7b inklusive der Antriebsmotoren 7a', 7b' und der Klemmvorrichtungen 8a, 8b, ist lediglich schematisch dargestellt. So ist es zum Beispiel offensichtlich, dass die Betätigung eines hydraulischen Klemmzylinders ein hydraulisches Leitungssystem erforderlich macht, das hier der besseren Übersichtlichkeit halber allerdings nicht dargestellt wurde.

Fig. 8 zeigt eine schematische Ansicht einer zweiten Vorrichtung und eines Metallbands 1 im Querschnitt auf Höhe der Messvorrichtung 2a. Die zweite Vorrichtung ist im Prinzip wie die erste Vorrichtung gemäß Figur 7 aufgebaut. Jedoch befinden sich die Verstelleinrichtungen 7a, 7b inklusive der Antriebsmotoren 7a', 7b' nun auf der Seite der Messvorrichtung 2a, die zum Metallband 1 zeigt.

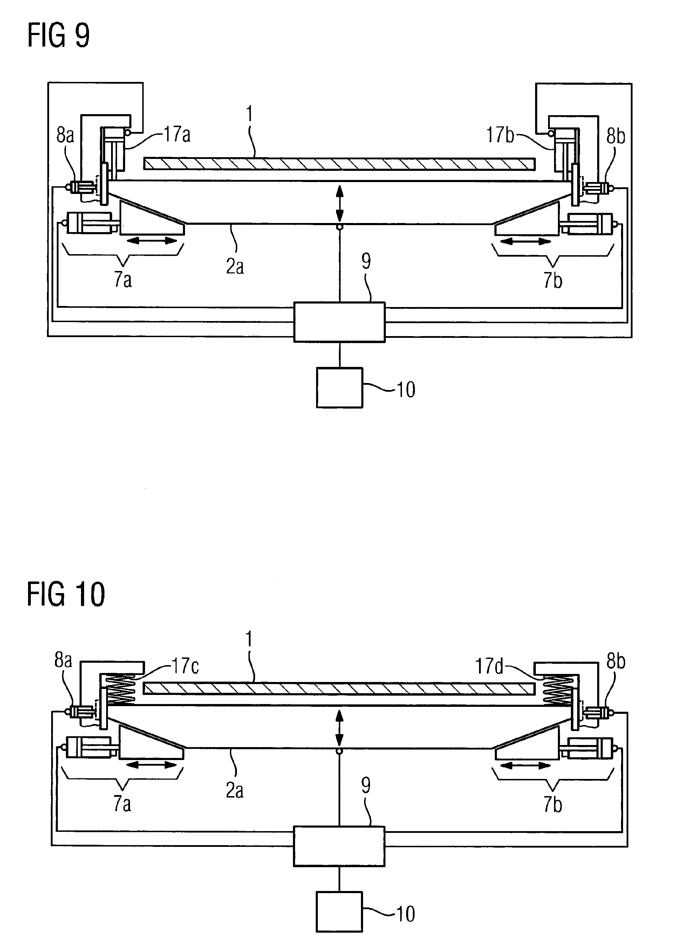

Fig. 9 zeigt eine schematische Ansicht einer dritten Vorrichtung zur Planheitsermittlung und eines Metallbands 1 im Querschnitt auf Höhe der Messvorrichtung 2a. Die Messeinrichtung 2a ist auch hier unterhalb des Metallbandes 1 höhenverstellbar angeordnet. Dazu ist die Messvorrichtung 2a zu beiden Seiten mit je einer hydraulischen Verstelleinrichtung 7a, 7b verbunden, welche hier in Form einer hydraulischen Keilverstellung realisiert ist, die sich auf der dem Metallband 1 abgewandten Seite der Messvorrichtung 2a befindet. Alternativ dazu kann eine pneumatische Keilverstellung verwendet werden.

Auch eine Keilverstellung mittels eines Gewindespindeltriebs ist alternativ verwendbar, wobei die Spindel des Gewindespindeltriebs in den Keil hinein bzw. aus diesem heraus gedreht wird, um unterschiedliche Keilpositionen einzustellen.

Die verschiebbaren Keile der hydraulischen Keilverstellung werden hier beidseitig jeweils mit einem Proportionalventil angesteuert, welches mittels eines elektronischen Analogausgangs angesteuert wird. Der Verstellbereich der Keile liegt beispielsweise im Bereich von ± 50 mm. Bei einer angenommenen Steigung der Keilflächen von 10% ergibt sich eine proportionale Verstellung der Messvorrichtung 2a von ± 5 mm. Die Dimensionen hinsichtlich des Verstellbereichs und der Keile sind für die jeweilige Anwendung und deren Parameter separat zu wählen und sind hier demnach lediglich beispielhaft aufgeführt.

Auf der dem Metallband 1 zugewandten Seite der Messvorrichtung 2a befinden sich zwei Einrichtungen 17a, 17b zur Ausübung eines Gegendrucks auf die Messvorrichtung 2a, hier in Form hydraulischer Gegendruckzylinder, welche die Positioniergenauigkeit des Systems erhöhen. Die Gegendruckzylinder drücken die Messvorrichtung 2a dabei permanent gegen die Keile der hydraulischen Keilverstellung. Eine Steuereinheit 9 und eine optionale Eingabeeinheit 10 übernehmen im Prinzip die bereits zu Figur 7 beschriebenen Aufgaben. Zusätzlich übernimmt die Steuereinheit 9 die Ansteuerung der hydraulischen Gegendruckzylinder. Alternativ zu den hydraulischen Gegendruckzylindern können auch pneumatische Gegendruckzylinder oder mechanische Gegendruckfedern eingesetzt werden.

Der Istwert der Position der Messvorrichtung 2a wird auch hier bei Bedarf mittels der Verstelleinrichtungen 7a, 7b an den Sollwert angepasst. Dazu wird die Messvorrichtung 2a mittels der hydraulischen Keilverstellung nach oben in Richtung des Metallbands 1 oder weg vom Metallband 1 bewegt. Zum Ausgleich einer Schräglage der Messvorrichtung 2a gegenüber dem Metallband 1 ist auch eine gegenläufige Bewegung der beiden Seiten der Messvorrichtung 2a über die hydraulische Keilverstellung einstellbar.

Sobald die Messvorrichtung 2a ihre optimale Position gemäß der Sollwertvorgabe erreicht hat, werden mittels der Steuereinheit 9 gegebenenfalls vorhandene Klemmvorrichtungen 8a, 8b, hier in Form hydraulischer Klemmzylinder, aktiviert, welche die Messvorrichtung in ihrer aktuellen Position fixieren und gegen unbeabsichtigte Positionsänderungen sichern. Erfolgt eine Änderung der Verfahrensparameter, beispielsweise durch einen Metallbandwechsel, welche der Steuereinheit 9 beispielsweise mittels der Eingabeeinheit 10 mitgeteilt wird, wird in der Steuereinheit 9 mindestens ein neuer Sollwert für die Position der Messvorrichtung 2a ermittelt, ein Steuersignal ausgegeben, das ein Lösen der Klemmzylinder auslöst und der Istwert der Position der Messvorrichtung 2a mittels der Verstelleinrichtungen 7a, 7b in Richtung des neuen mindestens einen Sollwerts verändert. Die Klemmvorrichtungen 8a, 8b können aber auch entfallen.

Die Kommunikation zwischen der Steuereinheit 9 und den einzelnen Komponenten der dritten Vorrichtung zur Planheitsermittlung, wie der Messvorrichtung 2a, den Verstelleinrichtungen 7a, 7b, den Einrichtungen 17a, 17b zur Ausübung eines Gegendrucks in Form von hydraulischen Gegendruckzylindern und den Klemmvorrichtungen 8a, 8b in Form hydraulischer Klemmzylinder, ist wie bereits in Figur 7 lediglich schematisch dargestellt. So ist es zum Beispiel offensichtlich, dass die Betätigung eines hydraulischen Gegendruckzylinders und/oder eines hydraulischen Klemmzylinders ein hydraulisches Leitungssystem erforderlich macht, das hier der besseren Übersichtlichkeit halber allerdings nicht dargestellt wurde.

Fig. 10 zeigt eine schematische Ansicht einer vierten Vorrichtung zur Planheitsermittlung und eines Metallbands 1 im Querschnitt auf Höhe der Messvorrichtung 2a, die im Prinzip aufgebaut ist wie die dritte Vorrichtung gemäß Figur 9. Allerdings sind hier die hydraulischen Gegendruckzylinder durch Einrichtungen 17c, 17d zur Ausübung eines Gegendrucks in Form mechanischen Gegendruckfedern ersetzt worden, die weder eine Ansteuerung mittels des Steuergeräts 9 noch ein hydraulisches Leitungssystem benötigen.

## Patentansprüche

1. Verfahren zur Ermittlung einer Planheit eines Metallbandes (1) unter Zug mittels mindestens einer berührungslos arbeitenden Messvorrichtung (2a, 2b), wobei die mindestens eine Messvorrichtung (2a, 2b) in einer Position mit einem Abstand und/oder einer Raumlage relativ zu einer Oberseite und/oder einer Unterseite des Metallbands (1) angeordnet wird, wobei
mindestens eine Verstelleinrichtung (7, 7', 7a, 7b) derart mit der mindestens einen Messvorrichtung (2a, 2b) verbunden wird, dass die Position der mindestens einen Messvorrichtung (2a, 2b) relativ zur Oberseite und/oder Unterseite des Metallbands (1) verstellbar ist, während das Metallband (1) unter Zug bewegt wird,
**dadurch gekennzeichnet,**
**dass** die Position der mindestens einen Messvorrichtung (2a, 2b) gegenüber der Oberseite und/oder der Unterseite des Metallbands (1) mittels mindestens einer elektromechanischen Verstelleinrichtung (7, 7', 7a, 7b) in Form eines Gewindespindeltriebs oder mittels mindestens einer Verstelleinrichtung (7, 7', 7a, 7b) in Form einer pneumatischen oder hydraulischen Keilverstellung verstellt wird.

2. Verfahren nach Anspruch 1, **dadurch gekennzeichnet,**
**dass** in mehreren über eine Breite des Metallbands (1) angeordneten Breitenabschnitten mittels der mindestens einen berührungslos arbeitenden Messvorrichtung (2a, 2b) jeweils ein Messwert erfasst wird und aus den erfassten Messwerten die Planheit des Metallbands (1) ermittelt wird.

3. Verfahren nach Anspruch 1 oder Anspruch 2,
**dadurch gekennzeichnet, dass** mittels der mindestens einen Verstelleinrichtung (7, 7', 7a, 7b) die Position der mindestens einen Messvorrichtung (2a, 2b) gegenüber der Oberseite und/oder der Unterseite des Metallbands (1) verstellt wird, während das Metallband (1) bewegt wird.

4. Verfahren nach einem der Ansprüche 1 bis 3,
**dadurch gekennzeichnet, dass** der Gewindespindeltrieb eine Keilverstellung antreibt, wobei eine Spindel des Gewindespindeltriebs in einen Keil der Keilverstellung hinein oder aus diesem heraus gedreht wird, um unterschiedliche Keilpositionen einzustellen.

5. Verfahren nach einem der Ansprüche 1 bis 4,
**dadurch gekennzeichnet, dass** zwei Verstelleinrichtungen (7, 7', 7a, 7b) eingesetzt werden, die asynchron verstellbar sind und einen Ausgleich einer Schräglage der mindestens einen Messvorrichtung (2a, 2b) ermöglichen.

6. Verfahren nach einem der Ansprüche 1 bis 5,
**dadurch gekennzeichnet, dass** während und/oder nach der Verstellung der Position der mindestens einen Messvorrichtung (2a, 2b) eine mechanische Führung und Lagestabilisierung der mindestens einen Messvorrichtung (2a, 2b) mittels mindestens einer Einrichtung (17a, 17b, 17c, 17d) zur Ausübung eines Gegendrucks auf die Messvorrichtung (2a, 2b) erfolgt, wobei der Gegendruck auf die der Verstelleinrichtung (7, 7', 7a, 7b) in Form einer hydraulischen oder pneumatischen Keilverstellung abgewandte Seite der Messvorrichtung (2a, 2b) einwirkt.

7. Verfahren nach Anspruch 2 oder Anspruch 2 in Verbindung mit einem der Ansprüche 3 bis 6, **dadurch gekennzeichnet, dass** der Abstand zwischen dem Metallband (1) und der mindestens einen Messvorrichtung (2a, 2b) jeweils in den Breitenabschnitten erfasst wird.

8. Verfahren nach Anspruch 7, **dadurch gekennzeichnet, dass** die in den Breitenabschnitten erfassten Abstände an mindestens eine Steuereinheit (9) übermittelt werden, in welcher Sollwerte für die Positionierung der Messvorrichtung (2a, 2b) hinterlegt sind oder ermittelt werden, und dass die mindestens eine Steuereinheit (9) eine Änderung der Position der Messvorrichtung (2a, 2b) in Richtung der Sollwerte veranlasst.

9. Verfahren nach Anspruch 8, **dadurch gekennzeichnet, dass** bei Überschreiten einer vorbestimmten, maximal zulässigen Abweichung der Position der mindestens einen Messvorrichtung (2a, 2b) von den Sollwerten die mindestens eine Verstelleinrichtung (7, 7', 7a, 7b) derart verstellt wird, dass die mindestens eine Messvorrichtung (2a, 2b) vor mechanischer Beschädigung durch das Metallband (1) geschützt angeordnet wird.

10. Verfahren nach einem der Ansprüche 8 oder 9,
**dadurch gekennzeichnet, dass** wenigstens ein Sollwert basierend auf mindestens einem Verfahrensparameter ermittelt wird, wobei ein Verfahrensparameter eine Geometrie des Metallbands (1) und/oder eine Qualität des Metallbands (1) und/oder sonstige Prozessparameter betrifft.

11. Verfahren nach Anspruch 10, **dadurch gekennzeichnet, dass** ein Verfahrensparameter eine Härte des Metallbands (1), einen E-Modul des Metallbands (1), eine Dicke des Metallbands (1), eine Breite des Metallbands(1), eine Zugkraft am Metallband (1) oder Koordinaten hinsichtlich einer Raumlage oder zeitlichen Abfolge der Raumlage einer Nulllage des Metallbands (1) betrifft.

12. Vorrichtung zur Ermittlung einer Planheit eines bewegten Metallbandes (1) unter Zug, insbesondere nach einem der Ansprüche 1 bis 11, mit mindestens einer berührungslos arbeitenden Messvorrichtung (2a, 2b), die in einer Position mit einem Abstand und/oder einer Raumlage relativ zu einer Oberseite und/oder einer Unterseite des Metallbands (1) angeordnet ist, und mit
mindestens einer Verstelleinrichtung (7, 7', 7a, 7b), die derart mit der mindestens einen Messvorrichtung (2a, 2b) verbunden ist, dass die Position der mindestens einen Messvorrichtung (2a, 2b) relativ zur Oberseite und/oder Unterseite des bewegten Metallbands (1) verstellbar ist, **dadurch gekennzeichnet,**
**dass** die Position der mindestens einen Messvorrichtung (2a, 2b) gegenüber der Oberseite und/oder der Unterseite des Metallbands (1) mittels mindestens einer elektromechanischen Verstelleinrichtung (7, 7', 7a, 7b) in Form eines Gewindespindeltriebs oder mittels mindestens einer Verstelleinrichtung (7, 7', 7a, 7b) in Form einer pneumatischen oder hydraulischen Keilverstellung verstellbar ist.

13. Vorrichtung nach Anspruch 12, **dadurch gekennzeichnet, dass** mittels der mindestens einen berührungslos arbeitenden Messvorrichtung (2a, 2b) in mehreren über eine Breite des Metallbands (1) angeordneten Breitenabschnitten jeweils ein Messwert erfassbar ist und aus den erfassten Messwerten die Planheit des Metallbands (1) ermittelbar ist.

14. Vorrichtung nach Anspruch 12 oder Anspruch 13,
**dadurch gekennzeichnet, dass** mittels der mindestens einen Verstelleinrichtung (7, 7', 7a, 7b) die Position der mindestens einen Messvorrichtung (2a, 2b) gegenüber der Oberseite und/oder der Unterseite des bewegten Metallbands (1) verstellbar ist.

15. Vorrichtung nach einem der Ansprüche 12 bis 14,
**dadurch gekennzeichnet, dass** in Laufrichtung des Metallbands (1) gesehen mindestens zwei nebeneinander angeordnete Messvorrichtungen (2a, 2b) vorhanden sind.

16. Vorrichtung nach Anspruch 15, **dadurch gekennzeichnet, dass** eine Lage von mindestens zwei nebeneinander angeordneten Messvorrichtungen (2a, 2b) relativ zueinander veränderbar ist.

17. Vorrichtung nach einem der Ansprüche 12 bis 16,
**dadurch gekennzeichnet, dass** zwei Verstelleinrichtungen vorhanden sind, die asynchron verstellbar sind und einen Ausgleich einer Schräglage der mindestens einen Messvorrichtung (2a, 2b) ermöglichen.

18. Vorrichtung nach einem der Ansprüche 12 bis 17,
**dadurch gekennzeichnet, dass** der Gewindespindeltrieb eine Keilverstellung antreibend ausgebildet ist, wobei eine Spindel des Gewindespindeltriebs in einen Keil der Keilverstellung hinein oder aus diesem heraus drehbar ist, um unterschiedliche Keilpositionen einzustellen.

19. Vorrichtung nach einem der Ansprüche 12 bis 18,
**dadurch gekennzeichnet, dass** die Vorrichtung zur mechanischen Führung und Lagestabilisierung der mindestens einen Messvorrichtung (2a, 2b) während und/oder nach der Verstellung der Position der mindestens einen Messvorrichtung (2a, 2b) mindestens eine Einrichtung (17a, 17b, 17c, 17d) zur Ausübung eines Gegendrucks auf die Messvorrichtung (2a, 2b) aufweist, wobei der Gegendruck auf die der Verstelleinrichtung (7, 7', 7a, 7b) in Form einer hydraulischen oder pneumatischen Keilverstellung abgewandte Seite der Messvorrichtung (2a, 2b) einwirkt.

20. Vorrichtung nach einem der Ansprüche 12 bis 19,
**dadurch gekennzeichnet, dass** eine jede Messvorrichtung (2a, 2b) jeweils mindestens eine Verstelleinrichtung (7, 7', 7a, 7b) aufweist.

21. Vorrichtung nach einem der Ansprüche 12 bis 20,
**dadurch gekennzeichnet, dass** die mindestens eine Verstelleinrichtung (7, 7', 7a, 7b) derart ausgebildet ist, dass der Abstand der mindestens einen Messvorrichtung (2a, 2b) zur Oberseite und/oder Unterseite des Metallbands (1) um mindestens ± 5 mm, insbesondere um mindestens ± 10 mm, verstellbar ist.

22. Vorrichtung nach einem der Ansprüche 12 bis 21,
**dadurch gekennzeichnet, dass** die Vorrichtung mindestens eine Steuereinheit (9) umfasst, in welcher Sollwerte für die Positionierung der mindestens einen Messvorrichtung (2a, 2b) hinterlegt sind oder ermittelbar sind, und dass mittels der mindestens einen Steuereinheit (9) eine Änderung der Position in Richtung der Sollwerte vornehmbar ist.

23. Vorrichtung nach einem der Ansprüche 12 bis 22,
**dadurch gekennzeichnet, dass** mittels der Vorrichtung wenigstens ein Sollwert basierend auf mindestens einem Verfahrensparameter ermittelbar ist, wobei ein Verfahrensparameter eine Geometrie des Metallbands (1) und/oder eine Qualität des Metallbands (1) und/oder sonstige Prozessparameter betrifft.

24. Vorrichtung nach Anspruch 23, **dadurch gekennzeichnet, dass** ein Verfahrensparameter eine Härte des Metallbands (1), einen E-Modul des Metallbands (1), eine Dicke des Metallbands (1), eine Breite des Metallbands (1), eine Zugkraft am Metallband (1) oder Koordinaten hinsichtlich einer Raumlage oder zeitlichen Abfolge der Raumlage einer Nulllage des Metallbands (1) betrifft.

## Claims

1. Method for determining a flatness of a metal strip (1) under tension by means of at least one contactless measuring apparatus (2a, 2b), wherein the at least one measuring apparatus (2a, 2b) is arranged in a position with a spacing and/or a spatial position relative to a top side and/or a bottom side of the metal strip (1), wherein at least one adjusting device (7, 7', 7a, 7b) is connected to the at least one measuring apparatus (2a, 2b) in such a manner that the position of the at least one measuring apparatus (2a, 2b) relative to the top side and/or bottom side of the metal strip (1) can be adjusted while the metal strip (1) is moving under tension,
**characterized**
**in that** the position of the at least one measuring apparatus (2a, 2b) with respect to the top side and/or the bottom side of the metal strip (1) is adjusted by means of at least one electromechanical adjusting device (7, 7', 7a, 7b) in the form of a threaded spindle drive or by means of at least one adjusting device (7, 7', 7a, 7b) in the form of a pneumatic or hydraulic wedge adjustment.

2. Method according to Claim 1, **characterized in that** a measured value is detected by means of the at least one contactless measuring apparatus (2a, 2b) in each of a plurality of width portions arranged over a width of the metal strip (1), and the flatness of the metal strip (1) is determined from the detected measured values.

3. Method according to Claim 1 or Claim 2, **characterized in that** the position of the at least one measuring apparatus (2a, 2b) with respect to the top side and/or the bottom side of the metal strip (1) is adjusted by means of the at least one adjusting device (7, 7', 7a, 7b) while the metal strip (1) is moving.

4. Method according to one of Claims 1 to 3, **characterized in that** the threaded spindle drive drives a wedge adjustment, wherein a spindle of the threaded spindle drive is rotated into or out of a wedge of the wedge adjustment in order to set different wedge positions.

5. Method according to one of Claims 1 to 4, **characterized in that** use is made of two adjusting devices (7, 7', 7a, 7b), which are asynchronously adjustable and make it possible to compensate for an oblique position of the at least one measuring apparatus (2a, 2b).

6. Method according to one of Claims 1 to 5, **characterized in that**, during and/or after the adjustment of the position of the at least one measuring apparatus (2a, 2b), the at least one measuring apparatus (2a, 2b) is mechanically guided and positionally stabilized by means of at least one device (17a, 17b, 17c, 17d) for exerting a counterpressure on the measuring apparatus (2a, 2b), wherein the counterpressure acts on that side of the measuring apparatus (2a, 2b) which is remote from the adjusting device (7, 7', 7a, 7b) in the form of a hydraulic or pneumatic wedge adjustment.

7. Method according to Claim 2 or Claim 2 in conjunction with one of Claims 3 to 6, **characterized in that** the spacing between the metal strip (1) and the at least one measuring apparatus (2a, 2b) is detected in each of the width portions.

8. Method according to Claim 7, **characterized in that** the spacings detected in the width portions are transmitted to at least one control unit (9) in which setpoint values for the positioning of the measuring apparatus (2a, 2b) are stored or are determined, and **in that** the at least one control unit (9) prompts a change in the position of the measuring apparatus (2a, 2b) toward the setpoint values.

9. Method according to Claim 8, **characterized in that**, if a predetermined, maximum permissible deviation of the position of the at least one measuring apparatus (2a, 2b) from the setpoint values is exceeded, the at least one adjusting device (7, 7', 7a, 7b) is adjusted in such a manner that the at least one measuring apparatus (2a, 2b) is arranged so as to be protected against mechanical damage by the metal strip (1).

10. Method according to either of Claims 8 and 9, **characterized in that** at least one setpoint value is determined on the basis of at least one method parameter, wherein a method parameter relates to a geometry of the metal strip (1) and/or a quality of the metal strip (1) and/or other process parameters.

11. Method according to Claim 10, **characterized in that** a method parameter relates to a hardness of the metal strip (1), a modulus of elasticity of the metal strip (1), a thickness of the metal strip (1), a width of the metal strip (1), a tensile force on the metal strip (1) or coordinates with respect to a spatial position or temporal sequence of the spatial position of a zero position of the metal strip (1).

12. Apparatus for determining a flatness of a moving metal strip (1) under tension, in particular according to one of Claims 1 to 11, comprising at least one contactless measuring apparatus (2a, 2b), which is arranged in a position with a spacing and/or a spatial position relative to a top side and/or a bottom side of the metal strip (1), and comprising
at least one adjusting device (7, 7', 7a, 7b), which is connected to the at least one measuring apparatus (2a, 2b) in such a manner that the position of the at least one measuring apparatus (2a, 2b) relative to the top side and/or bottom side of the moving metal strip (1) can be adjusted,
**characterized**
**in that** the position of the at least one measuring apparatus (2a, 2b) with respect to the top side and/or the bottom side of the metal strip (1) can be adjusted by means of at least one electromechanical adjusting device (7, 7', 7a, 7b) in the form of a threaded spindle drive or by means of at least one adjusting device (7, 7', 7a, 7b) in the form of a pneumatic or hydraulic wedge adjustment.

13. Apparatus according to Claim 12, **characterized in that** a measured value can be detected by means of the at least one contactless measuring apparatus (2a, 2b) in each of a plurality of width portions arranged over a width of the metal strip (1), and the flatness of the metal strip (1) can be determined from the detected measured values.

14. Apparatus according to Claim 12 or Claim 13, **characterized in that** the position of the at least one measuring apparatus (2a, 2b) with respect to the top side and/or the bottom side of the moving metal strip (1) can be adjusted by means of the at least one adjusting device (7, 7', 7a, 7b).

15. Apparatus according to one of Claims 12 to 14, **characterized in that** at least two measuring apparatuses (2a, 2b) arranged next to one another are provided, as seen in the direction of movement of the metal strip (1).

16. Apparatus according to Claim 15, **characterized in that** a position of at least two measuring apparatuses (2a, 2b) arranged next to one another relative to one another can be changed.

17. Apparatus according to one of Claims 12 to 16, **characterized in that** two adjusting devices are provided, which are asynchronously adjustable and make it possible to compensate for an oblique position of the at least one measuring apparatus (2a, 2b).

18. Apparatus according to one of Claims 12 to 17, **characterized in that** the threaded spindle drive is designed so that it drives a wedge adjustment, wherein a spindle of the threaded spindle drive can be rotated into or out of a wedge of the wedge adjustment in order to set different wedge positions.

19. Apparatus according to one of Claims 12 to 18, **characterized in that** the apparatus for mechanically guiding and positionally stabilizing the at least one measuring apparatus (2a, 2b) during and/or after the adjustment of the position of the at least one measuring apparatus (2a, 2b) comprises at least one device (17a, 17b, 17c, 17d) for exerting a counterpressure on the measuring apparatus (2a, 2b), wherein the counterpressure acts on that side of the measuring apparatus (2a, 2b) which is remote from the adjusting device (7, 7', 7a, 7b) in the form of a hydraulic or pneumatic wedge adjustment.

20. Apparatus according to one of Claims 12 to 19, **characterized in that** each measuring apparatus (2a, 2b) comprises at least one adjusting device (7, 7', 7a, 7b).

21. Apparatus according to one of Claims 12 to 20, **characterized in that** the at least one adjusting device (7, 7', 7a, 7b) is designed in such a manner that the spacing between the at least one measuring apparatus (2a, 2b) and the top side and/or bottom side of the metal strip (1) can be adjusted by at least ± 5 mm, in particular by at least ± 10 mm.

22. Apparatus according to one of Claims 12 to 21, **characterized in that** the apparatus comprises at least one control unit (9) in which setpoint values for the positioning of the at least one measuring apparatus (2a, 2b) are stored or can be determined, and **in that** a change in the position toward the setpoint values can be made by means of the at least one control unit (9).

23. Apparatus according to one of Claims 12 to 22, **characterized in that** at least one setpoint value can be determined on the basis of at least one method parameter by means of the apparatus, wherein a method parameter relates to a geometry of the metal strip (1) and/or a quality of the metal strip (1) and/or other process parameters.

24. Apparatus according to Claim 23, **characterized in that** a method parameter relates to a hardness of the metal strip (1), a modulus of elasticity of the metal strip (1), a thickness of the metal strip (1), a width of the metal strip (1), a tensile force on the metal strip (1) or coordinates with respect to a spatial position or temporal sequence of the spatial position of a zero position of the metal strip (1).

## Revendications

1. Procédé de détermination de la planéité d'un feuillard ( 1 ) métallique sous traction à l'aide d'au moins un dispositif (2a, 2b ) de mesure opérant sans contact, dans lequel on met le au moins un dispositif ( 2a, 2b ) de mesure en une position à distance et/ou en une position spatiale par rapport à une face supérieure et/ou à une face inférieure du feuillard ( 1 ) métallique, dans lequel
on relie au moins un dispositif ( 7, 7', 7a, 7b ) de réglage au au moins un dispositif ( 2a, 2b ) de mesure, de manière à pouvoir régler la position du au moins un dispositif ( 2a, 2b ) de mesure par rapport à la face supérieure et/ou à la face inférieure du feuillard ( 1 ) métallique, pendant que le feuillard ( 1 ) métallique se déplace sous traction, **caractérisé**
**en ce que** l'on règle la position du au moins un dispositif ( 2a, 2b ) de mesure par rapport à la face supérieure et/ou à la face inférieure du feuillard ( 1 ) métallique à l'aide d'au moins un dispositif ( 7, 7', 7a, 7b ) électromécanique de réglage sous la forme d'un entraînement à broche filetée ou à l'aide d'au moins un dispositif ( 7, 7', 7a, 7b ) de réglage sous la forme d'un réglage par coin pneumatique ou hydraulique.

2. Procédé suivant la revendication 1, **caractérisé en ce que** l'on relève une valeur de mesure à l'aide du au moins un dispositif ( 2a, 2b ) de mesure, opérant sans contact en plusieurs sections en largeur, disposées sur une largeur du feuillard ( 1 ) métallique et on détermine la planéité du feuillard ( 1 ) métallique à partir des valeurs de mesure relevées.

3. Procédé suivant la revendication 1 ou la revendication 2, **caractérisé en ce que** l'on règle à l'aide du au moins un dispositif ( 7, 7', 7a, 7b ) de réglage la position du au moins un dispositif ( 2a, 2b ) de mesure par rapport à la face supérieure et/ou à la face inférieure du feuillard ( 1 ) métallique, pendant que le feuillard ( 1 ) métallique se déplace.

4. Procédé suivant l'une des revendications 1 à 3, **caractérisé en ce que** l'entraînement par broche filetée entraîne un réglage par coin, une broche de l'entraînement par broche filetée tournant, en entrant dans un coin du réglage par coin ou en sortant, pour régler des positions différentes du coin.

5. Procédé suivant l'une des revendications 1 à 4, **caractérisé en ce qu'**on utilise deux dispositifs ( 7, 7', 7a, 7b ) de réglage, qui sont réglables de manière asynchrone et qui permettent d'obtenir une compensation d'une position inclinée du au moins un dispositif ( 2a, 2b ) de mesure.

6. Procédé suivant l'une des revendications 1 à 5, **caractérisé en ce que**, pendant et/ou après le réglage de la position du au moins un dispositif ( 2a, 2b ) de mesure, on effectue un guidage mécanique et une stabilisation en position du au moins un dispositif ( 2a, 2b ) de mesure à l'aide d'au moins un dispositif ( 17a, 17b, 17c, 17d ) d'application d'une contre pression au dispositif ( 2a, 2b ) de mesure, la contre pression agissant sur le côté du dispositif ( 2a, 2b ) de mesure éloigné du dispositif ( 7, 7', 7a, 7b ) de réglage sous la forme d'un réglage par coin hydraulique ou pneumatique.

7. Procédé suivant la revendication 2 ou revendication 2 en liaison avec l'une des revendications 3 à 6, **caractérisé en ce qu'**on relève respectivement dans les sections en largeur la distance entre le feuillard ( 1 ) métallique et le au moins un dispositif ( 2a, 2b ) de mesure.

8. Procédé suivant la revendication 7, **caractérisé en ce que** l'on transmet les distances relevées dans les sections en largeur à au moins une unité ( 9 ) de commande, dans laquelle sont mémorisées ou déterminées des valeurs de consigne du positionnement du dispositif ( 2a, 2b ) de mesure, et **en ce que** la au moins une unité ( 9 ) de commande provoque une modification de la position du dispositif ( 2a, 2b ) de mesure en direction des valeurs de consigne.

9. Procédé suivant la revendication 8, **caractérisé en ce que**, si un écart admissible au maximum et déterminé à l'avance de la position du au moins un dispositif ( 2a, 2b ) de mesure aux valeurs de consigne est dépassé, on règle le au moins un dispositif ( 7, 7', 7a, 7b ) de réglage de manière à mettre le au moins un dispositif ( 2a, 2b ) de mesure à l'abri d'un endommagement mécanique par le feuillard ( 1 ) métallique.

10. Procédé suivant l'une des revendications 8 ou 9, **caractérisé en ce que** l'on détermine au moins une valeur de consigne reposant sur au moins un paramètre de procédé, un paramètre de procédé concernant une géométrie du feuillard ( 1 ) métallique et/ou une qualité du feuillard ( 1 ) métallique et/ou d'autres paramètres de processus.

11. Procédé suivant la revendication 10, **caractérisé en ce qu'**un paramètre de procédé concerne une dureté du feuillard ( 1 ) métallique, un module E du feuillard ( 1 ) métallique, une épaisseur du feuillard ( 1 ) métallique, une largeur du feuillard ( 1 ) métallique, une force de traction s'appliquant au feuillard ( 1 ) métallique ou des coordonnées d'une position dans l'espace ou une suite dans le temps de la position dans l'espace d'une position zéro du feuillard ( 1 ) métallique.

12. Dispositif de détermination de la planéité d'un feuillard ( 1 ) métallique en déplacement sous traction, notamment suivant l'une des revendications 1 à 11, comprenant au moins un dispositif ( 2a, 2b ) de mesure opérant sans contact, qui est monté dans une position à une distance et/ou en une position dans l'espace par rapport à une face supérieure et/ou une face inférieure du feuillard ( 1 ) métallique, et comprenant
- au moins un dispositif ( 7, 7', 7a, 7b ) de réglage, qui est relié au au moins un dispositif ( 2a, 2b ) de mesure de manière à pouvoir régler la position du au moins un dispositif ( 2a, 2b ) de mesure par rapport à la face supérieure et/ou à la face inférieure du feuillard ( 1 ) métallique en déplacement,
**caractérisé**
**en ce que** la position du au moins un dispositif ( 2a, 2b ) de mesure par rapport à la face supérieure et/ou à la face inférieure du feuillard ( 1 ) métallique est réglable à l'aide d'au moins un dispositif ( 7, 7', 7a, 7b ) de réglage électromécanique sous la forme d'un entraînement à broche filetée ou à l'aide d'au moins un dispositif ( 7, 7', 7a, 7b ) de réglage sous la forme d'un réglage à coin pneumatique ou hydraulique.

13. Dispositif suivant la revendication 12, **caractérisé en ce qu'**à l'aide du au moins un dispositif ( 2a, 2b ) de mesure opérant sans contact, on peut relever respectivement une valeur de mesure dans plusieurs sections en largeur disposées sur une largeur du feuillard ( 1 ) métallique et déterminer la planéité du feuillard ( 1 ) métallique à partir des valeurs de mesure relevées.

14. Dispositif suivant la revendication 12 ou la revendication 13,
**caractérisé en ce que** la position du au moins un dispositif ( 2a, 2b ) de mesure par rapport à la face supérieure et/ou à la face inférieure du feuillard ( 1 ) métallique en déplacement est réglable à l'aide du au moins un dispositif ( 7, 7', 7a, 7b ) de réglage.

15. Dispositif suivant l'une des revendications 12 à 14, **caractérisé en ce qu'**il y a, considéré dans la direction de course du feuillard ( 1 ) métallique, au moins deux dispositifs ( 2a, 2b ) de mesure disposés l'un à côté de l'autre.

16. Dispositif suivant la revendication 15, **caractérisé en ce qu'**une position d'au moins deux dispositifs ( 2a, 2b ) de mesure disposés l'un à côté de l'autre est réglable l'un par rapport à l'autre.

17. Dispositif suivant l'une des revendications 12 à 16, **caractérisé en ce qu'**il y a deux dispositifs de réglage, qui sont réglables de manière asynchrone et qui rendent possible une compensation d'une position inclinée du au moins un dispositif ( 2a, 2b ) de mesure.

18. Dispositif suivant l'une des revendications 12 à 17, **caractérisé en ce que** l'entraînement par broche filetée est constitué de manière à entraîner un réglage par coin, une broche de l'entraînement par broche filetée pouvant tourner en pénétrant dans un coin du réglage par coin ou en sortant, pour régler des positions de coin différentes.

19. Dispositif suivant l'une des revendications 12 à 18, **caractérisé en ce que** le dispositif de guidage mécanique et de stabilisation en position du au moins un dispositif ( 2a, 2b ) de mesure, pendant et/ou après le réglage de la position du au moins un dispositif ( 2a, 2b ) de mesure, a au moins un dispositif ( 17a, 17b, 17c, 17d ) d'application d'une contre pression sur le dispositif ( 2a, 2b ) de mesure, la contre pression agissant sur le côté du dispositif de mesure ( 2a, 2b ) éloigné du dispositif ( 7, 7', 7a, 7b ) de réglage sous la forme d'un dispositif de réglage à coin hydraulique ou pneumatique.

20. Dispositif suivant l'une des revendications 12 à 19, **caractérisé en ce que** chaque dispositif ( 2a, 2b ) de mesure a respectivement au moins un dispositif ( 7, 7', 7a, 7b ) de réglage.

21. Dispositif suivant l'une des revendications 12 à 20, **caractérisé en ce que** le au moins un dispositif ( 7, 7', 7a, 7b ) de réglage est tel que la distance du au moins un dispositif ( 2a, 2b ) de mesure à la face supérieure et/ou à la face inférieure du feuillard ( 1 ) métallique est réglable d'au moins ± 5 mm, notamment d'au moins ± 10 mm.

22. Dispositif suivant l'une des revendications 12 à 21, **caractérisé en ce que** le dispositif comprend au moins une unité ( 9 ) de commande, dans laquelle sont mémorisées ou peuvent être déterminées des valeurs de consigne du positionnement du au moins un dispositif ( 2a, 2b ) de mesure, et **en ce qu'**une modification de la position en direction des valeurs de consigne peut être effectuée à l'aide de la au moins une unité ( 9 ) de commande.

23. Dispositif suivant l'une des revendications 12 à 22, **caractérisé en ce qu'**à l'aide du dispositif, on peut déterminer au moins une valeur de consigne reposant sur au moins un paramètre du procédé, un paramètre du procédé concernant une géométrie du feuillard ( 1 ) métallique et/ou une qualité du feuillard ( 1 ) métallique et/ou d'autres paramètres de processus.

24. Dispositif suivant la revendication 23, **caractérisé en ce qu'**un paramètre du procédé concerne une dureté du feuillard ( 1 ) métallique, un module E du feuillard ( 1 ) métallique, une épaisseur du feuillard ( 1 ) métallique, une largeur du feuillard ( 1 ) métallique, une force de traction s'appliquant au feuillard ( 1 ) métallique ou des coordonnées d'une position dans l'espace ou une suite dans le temps de la position dans l'espace d'une position zéro du feuillard ( 1 ) métallique.
